# EUROPEAN PATENT SPECIFICATION

(11) **EP 4 487 519 B1**
(45) Date of publication and mention of the grant of the patent: **21.01.2026**
(21) Application number: 23716720.0
(22) Date of filing: 15.03.2023
(51) Int. Cl.: H04L 5/00, H04W 72/40, H04W 72/25, H04W 92/18, H04W 74/00

(54) **UE COORDINATION IN A WIRELESS COMMUNICATION NETWORK**
BENUTZERGERÄTEKOORDINATION IN EINEM DRAHTLOSKOMMUNIKATIONSNETZWERK
COORDINATION D'UE DANS UN RÉSEAU DE COMMUNICATION SANS FIL

(30) Priority: 15.03.2022 US 202263319913 P
(43) Date of publication of application: 08.01.2025
(73) Proprietor: Google LLC, Mountain View, CA 94043 (US)
(72) Inventor: STAUFFER, Erik, Mountain View, California 94043 (US); WANG, Jibing, Mountain View, California 94043 (US); AKRAM, Aamir, Mountain View, California 94043 (US)
(74) Representative: Marks & Clerk GST
(86) International application number: PCT/US2023/015314
(87) International publication number: WO 2023/177750

(56) References cited:
- EP-A1- 4 093 132
- WO-A1-2021/167427
- US-A1- 2020 367 289
- "5G; NR; Radio Resource Control (RRC); Protocol specification (3GPP TS 38.331 version 16.6.0 Release 16)", vol. 3GPP RAN, no. V16.6.0, 11 October 2021 (2021-10-11), pages 1 - 948, XP014417317, Retrieved from the Internet <URL:http://www.etsi.org/deliver/etsi_ts/138300_138399/138331/16.06.00_60/ts_138331v160600p.pdf> [retrieved on 20211011]

## Description

### FIELD OF THE DESCRIPTION

This disclosure relates to wireless communications and, more particularly, to coordination among multiple user devices in a wireless communication network.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Telecommunication systems such as Evolved Universal Terrestrial Radio Access (EUTRA) and fifth-generation (5G) New Radio (NR) enable a user device (also known as a user equipment or "UE") to use one or more techniques to increase uplink and/or downlink throughput. For example, UEs can in some scenarios concurrently utilize radios/resources of multiple radio access network (RAN) nodes (e.g., base stations or components of a distributed base station or disaggregated base station) that are interconnected by a backhaul, in what is referred to as dual connectivity (DC) operation. These network nodes may all be nodes of the same radio access technology (RAT), or may include nodes of different RATs in what is known as multi-radio DC (MR-DC). Example DC configurations include EUTRA and NR dual connectivity (EN-DC), and NR-only dual connectivity (NR-DC).

As another example, telecommunication systems such as EUTRA and 5G NR support carrier aggregation (CA). In CA operation, a UE can utilize two carriers (a primary component carrier (PCC), and a secondary component carrier (SCC)) to increase uplink and/or downlink bandwidth.

As yet another example, telecommunication systems such as EUTRA and 5G NR support supplementary uplink (SUL) and supplementary downlink (SDL) operation. In SUL operation, a UE can utilize an additional carrier for uplink (UL) communications, e.g., to increase range in the UL direction if the SUL carrier is at a relatively low frequency. In SDL operation, a UE can utilize an additional carrier for downlink (DL) communications, e.g., to increase DL capacity/throughput. Some UEs can support DC, CA, and SUL/SDL procedures.

Techniques have also been proposed for sharing the radio resources of multiple UEs. As the number of cellular devices for personal use increases (e.g., with a single person having both a smartphone and a watch with cellular capabilities), for example, such techniques may become more widespread. However, opportunities remain to more efficiently achieve coordination among UEs in such scenarios.

WO2021167427A1 describes a method for a first terminal of a communication system including sharing information about a resource pool with a second terminal, receiving a request for resource allocation information from the second terminal, and transmitting, to the second terminal, resource allocation information indicating at least one resource related to the resource pool having been shared with the second terminal.

### SUMMARY

UEs and RANs of this disclosure can support one or more of the UE coordination (or "multi-UE") techniques disclosed herein. In particular, inter-UE messaging, and messaging between a RAN and a UE, can enable two or more UEs to coordinate to efficiently pool their resources to handle uplink (UL) and downlink (DL) communications. The coordinating UEs may be different personal devices of a single user (e.g., a smartphone and smart watch, smartphone and portable router device, or smartphone and connected automobile, etc.), for example.

To support one or more of the multi-UE operation techniques disclosed herein, the coordinating UEs establish a pairing link with each other. The pairing link may be a proximity services (ProSe) sidelink, a Bluetooth link, or an IEEE 802.11 wireless local area network link such as WiFi-Direct, for example. The coordinating UEs include one UE, referred to here as a "first UE," that initially communicates with the RAN to establish UE coordination. To configure a "second UE" of the coordinating UEs to handle communications with the RAN via certain radio resources (e.g., a particular carrier), the RAN (e.g., a base station of DU of a base station) initially sends configuration information to the first UE, and the first UE forwards the configuration information to the second UE via the pairing link. The second UE may send a configuration confirmation message back to the first UE via the pairing link, which the first UE may then relay back to the RAN. At some time thereafter, the RAN (e.g., the same base station) sends an activation message to the first UE. In response, the first UE uses the pairing link to signal the second UE to start communicating with the RAN in accordance with the configuration parameters (e.g., by sending an activation request to the second UE, receiving a confirmation message from the second UE in response, and possibly relaying the confirmation to the RAN).

In some implementations and/or scenarios, the RAN configures the second UE (via the first UE) to communicate on a different frequency, or set of frequencies, than the first UE. For example, the first UE may communicate with the RAN via an UL and a DL on respective frequencies in a first, frequency division duplex (FDD) operating band (e.g., n74), while the second UE communicates with the RAN via an UL and/or DL frequency or frequencies in a second operating band (e.g., n70, n75, or n80). As another example, the first UE may communicate unidirectionally with the RAN via an UL on a first frequency in an FDD operating band (e.g., n74), while the second UE communicates unidirectionally with the RAN via a DL on a second frequency in the same operating band (or vice versa). In some implementations and/or scenarios, the first and second UE communicate via different carriers that are provided by the RAN in either carrier aggregation (CA), dual connectivity (DC), supplementary UL (SUL), or supplementary downlink (SDL) operation. References herein to communications on or via different "frequencies" can refer, for example, to communications using frequencies of different operating bands, or to communications using different portions of the same operating band (e.g., UL and DL frequencies in an FDD operating band), unless a more specific meaning is clear from the context in which the terminology is used.

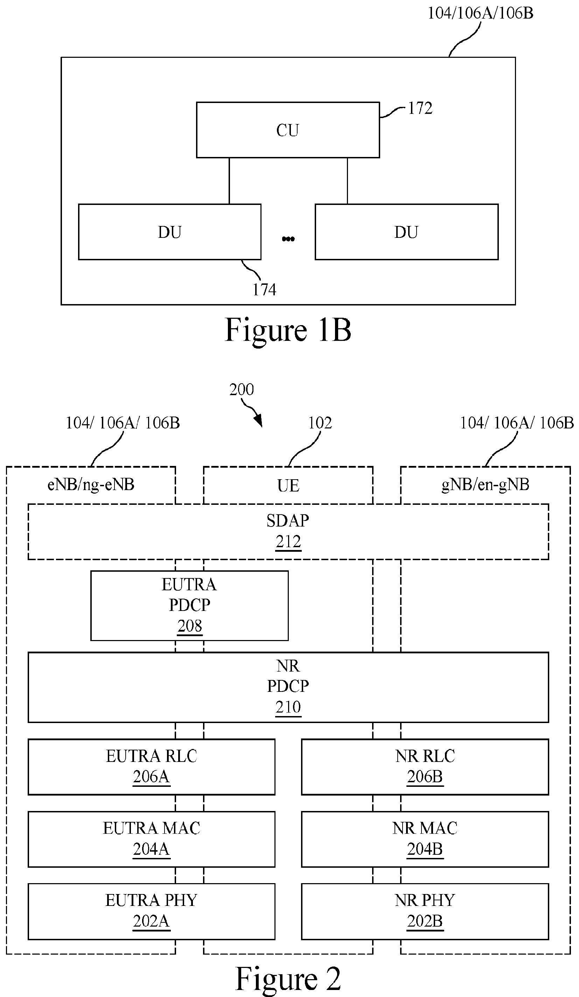

In implementations and/or scenarios where one of the coordinating UEs (e.g., the second UE) is configured for only DL (not UL) communications with the RAN, then that DL-only UE can use the pairing link to send control information (and possibly UL data) to another coordinating UE (e.g., the first UE), which in turn forwards the control information (and possibly UL data) to the RAN. As the term is used herein, a "RAN" may refer to a radio access network of a single RAT (e.g., only NR base stations), the combination of multiple radio access networks of a single RAT (e.g., an NR network operating in the FR1 frequency range and an NR network operating in the FR2 frequency range), or the combination of multiple radio access networks of different RATs (e.g., with both EUTRA and NR base stations). A RAN may also be implemented using any combination of integrated base stations and/or split base station architectures. An example split base station architecture is described below with reference to Fig. 1B.

In some implementations, the coordinating UEs (e.g., the first UE, or the two or more UEs collectively) can dynamically select (assign or reassign) which UE handles communications in a particular direction (UL and/or DL) and/or on a particular frequency. For example, the coordinating UEs may change which UE communicates on the SCC in CA operation, or which UE communicates on an SDL, or which UE communicates on the UL versus the DL of a particular carrier, etc., based on one or more factors such as UE battery status, UE temperature, UE buffer status, UE SAR limits, and/or channel conditions on a particular carrier or link.

The above-noted implementations, and/or other implementations disclosed herein, may provide various advantages over conventional techniques. For example, these implementations may provide a more efficient mechanism for using multiple UEs to increase throughput (e.g., by leveraging radio hardware and software resources that might otherwise remain largely unused), reduce interference (e.g., due to greater physical separation between antennas of different UEs), preserve UE battery life, facilitate UE compliance with specific absorption rate (SAR) limits, and so on.

One example is a method, implemented by a first user device, of coordinating with one or more other user devices to facilitate communications with a wireless communication network. The method includes pairing, by processing hardware of the first user device, with a second user device to establish a pairing link, and receiving, by the processing hardware and from the wireless communication network, configuration parameters for communicating with the wireless communication network via one or more frequencies. The method also includes transmitting, by the processing hardware and via the pairing link, the configuration parameters to the second user device, and receiving, by the processing hardware, an activation message from the wireless communication network. The method also includes, in response to receiving the activation message, transmitting to the second user device, by the processing hardware and via the pairing link, an activation signal to start the second user device communicating with the wireless communication network via the one or more frequencies in accordance with the configuration parameters.

In another example, a user device includes processing hardware configured to perform the above method.

### BRIEF DESCRIPTION OF THE DRAWINGS

Fig. 1A is a block diagram of an example wireless communication system in which techniques of this disclosure for multi-UE operation can be implemented;
Fig. 1B is a block diagram of an example base station in which a centralized unit (CU) and distributed units (DUs) operate in the wireless communication system of Fig. 1A;
Fig. 2 is a block diagram of an example protocol stack according to which a UE of Fig. 1A can communicate with one or more base stations of Fig. 1A;
Fig. 3 is a messaging diagram of an example implementation and scenario in which the UEs of Fig. 1A pair prior to multi-UE operation;
Fig. 4 is a messaging diagram of an example implementation and scenario in which, after first and second UEs pair with each other, the second UE is configured to assist the first UE in multi-UE operation;
Fig. 5 is a messaging diagram corresponding to an example implementation and scenario of multi-UE operation in which the first UE handles UL and DL communications on a first carrier or carrier pair, while the second UE handles DL-only communications on a second carrier;
Fig. 6 is a messaging diagram corresponding to an example implementation and scenario of multi-UE operation in which the first UE handles UL and DL communications on a first carrier or carrier pair, while the second UE handles UL and DL communications on a second carrier or carrier pair;
Fig. 7 is a messaging diagram corresponding to an example implementation and scenario of multi-UE operation in which the first UE handles UL-only communications on a first carrier, while the second UE handles DL-only communications on a second carrier;
Fig. 8 is a messaging diagram corresponding to an example implementation and scenario of multi-UE operation in which the first UE handles DL-only communications on a first carrier, while the second UE handles UL-only communications on a second carrier;
Fig. 9 is a block diagram of an example protocol stack split according to which the UEs of Fig. 1A can communicate when techniques of this disclosure for multi-UE operation are implemented;
Fig. 10 is a flow diagram of an example method, implemented by a user device such as a UE of Fig. 1A, for coordinating with one or more other user devices to facilitate communications with a wireless communication network such as the RAN of Fig. 1A.

### DETAILED DESCRIPTION OF THE DRAWINGS

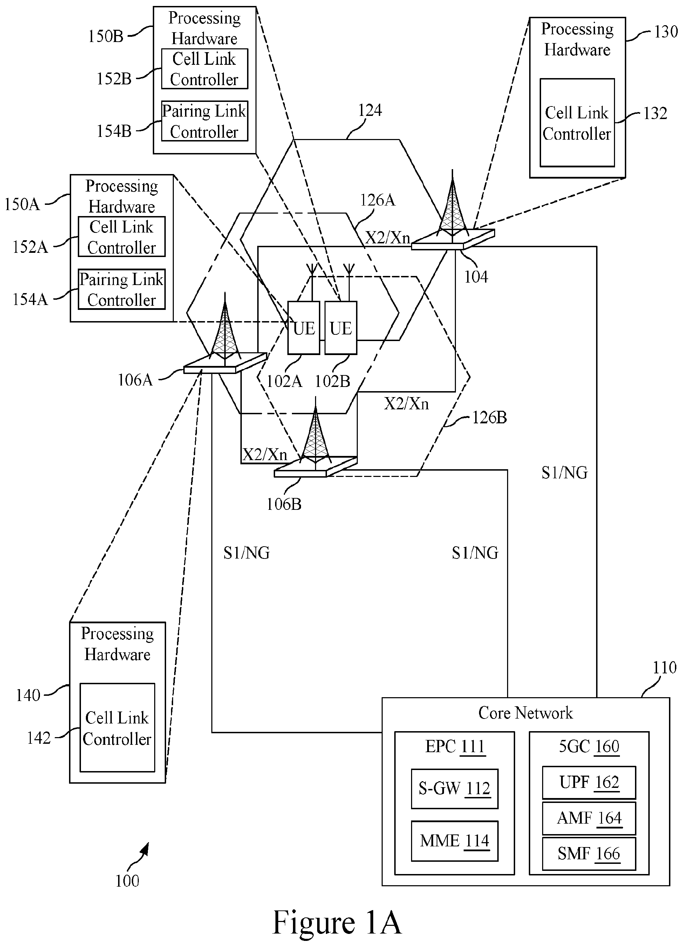

Fig. 1A depicts an example wireless communication system 100 that can implement multi-UE operation techniques of this disclosure. The wireless communication system 100 includes UEs 102A and 102B, as well as base stations 104, 106A, 106B that are connected to a core network (CN) 110. The base stations 104, 106A, 106B can include any suitable type, or types, of base stations, such as an evolved node B (eNB), a next-generation eNB (ng-eNB), or a 5G Node B (gNB), for example. As a more specific example, the base station 104 may be an eNB or a gNB, and the base station 106A and 106B may be gNBs.

The base station 104 supports a cell 124, the base station 106A supports a cell 126A, and the base station 106B supports a cell 126B. The base stations 104, 106A, 106B and their cells 124, 126A, 126B form at least a part of a RAN 108, with the RAN 108 collectively supporting communications with UEs such as UEs 102A, 102B using predefined operating bands (e.g., n5, n25, n95, etc.) that each support multiple frequency channels. The frequency channels in a given operating band may be fixed, or may be dynamically assigned or determined (e.g., with different center frequencies and/or different bandwidths at different times, for different UEs, and/or for different RATs supported by the RAN 108).

In the example shown, the cell 124 partially overlaps with both of cells 126A, 126B, such that a UE (e.g., 102A or 102B) can be in range to communicate with base stations 104, 106A, and 106B (or in range to detect or measure the signals from the base stations 104, 106A, and 106B, etc.). The overlap makes it possible for the UE to hand over between cells (e.g., from cell 124 to cell 126A or 126B) before the UE experiences radio link failure. Moreover, the overlap allows various dual connectivity (DC), carrier aggregation (CA), supplementary uplink (SUL), and/or supplementary downlink (SDL) scenarios. For example, the UE 102A can communicate in DC with the base station 104 (operating as a master node (MN)) and the base station 106A (operating as a secondary node (SN)) and, upon completing an SN change, can communicate with the base station 104 (operating as an MN) and the base station 106B (operating as an SN). As a more specific example, when the UE 102A is in DC with the base station 104 and 106A, the base station 104 may operate as a master eNB (MeNB), a master ng-eNB (Mng-eNB) or a master gNB (MgNB), and the base station 106A may operate as a secondary gNB (SgNB) or a secondary ng-eNB (Sng-eNB). In some implementations and scenarios where the UE 102A is in single connectivity (SC) with the base station 104 but is capable of operating in DC, the base station 104 may operate as an MeNB, an Mng-eNB or an MgNB, and the base station 106A may operate as a candidate SgNB (C-SgNB) or a candidate Sng-eNB (C-Sng-eNB). In some implementations any of the base stations 104, 106A, 106B generally can operate as an MN or an SN in different scenarios.

In operation, a UE can use a radio bearer (e.g., a data radio bearer (DRB) or a signal radio bearer (SRB)) that at different times terminates at an MN (e.g., the base station 104) or an SN (e.g., the base station 106A). The UE can apply one or more security keys when communicating on the radio bearer, in the UL (from the UE to a base station) and/or DL (from a base station to the UE) direction.

The base station 104 includes processing hardware 130, which may include one or more general-purpose processors (e.g., central processing units (CPUs)) and a computer-readable memory storing machine-readable instructions executable on the general-purpose processor(s), and/or special-purpose processing units. The processing hardware 130 in the example implementation of Fig. 1A includes a cell link controller 132 that is configured to manage or control procedures for establishing and maintaining cellular communications with UEs, from a network-side perspective. For example, the cell link controller 132 may include an RRC controller for managing or controlling RRC procedures (e.g., initial access, handovers, etc.) and RRC configurations, and may support network-side RACH procedures/messages, etc.

The base station 106A includes processing hardware 140, which may include one or more general-purpose processors (e.g., CPUs) and a computer-readable memory storing machine-readable instructions executable on the general-purpose processor(s), and/or special-purpose processing units. The processing hardware 140 in the example implementation of Fig. 1A includes a cell link controller 142, which may be similar to cell link controller 132. While not shown in Fig. 1A, the base station 106B may include processing hardware similar to the processing hardware 130 of the base station 104 and/or the processing hardware 140 of the base station 106A.

The UE 102A includes processing hardware 150A, which may include one or more general-purpose processors (e.g., CPUs) and a computer-readable memory storing machine-readable instructions executable on the general-purpose processor(s), and/or special-purpose processing units. The processing hardware 150A in the example implementation of Fig. 1A includes a cell link controller 152A that is configured to manage or control procedures for establishing and maintaining cellular communications with the RAN 108. For example, the cell link controller 152A may include an RRC controller for managing or controlling RRC procedures (e.g., initial access, handovers, etc.) and RRC configurations, and support UE-side RACH procedures/messages, etc. The processing hardware 150A also includes a pairing link controller 154A, which is configured to manage or control communication procedures for a short-range wireless communication link between UEs. For example, the pairing link controller 154A may support communications with other UEs via a proximity services (ProSe) sidelink, via a Bluetooth link, or via an IEEE 802.11 wireless local area network (e.g., Wi-Fi Direct) link.

The UE 102B includes processing hardware 150B with a cell link controller 152B and pairing link controller 154B. Processing hardware 150B, cell link controller 152B, and pairing link controller 154B may be similar to processing hardware 150A, cell link controller 152A, and pairing link controller 154A, respectively, of the UE 102A. Each of UEs 102A and 102B has at least two radios (e.g., radio frequency (RF) chains and associated baseband circuitry), including at least one radio dedicated to cellular communications, and at least one other radio dedicated to pairing link communications.

The CN 110 may be an evolved packet core (EPC) 111 or a fifth-generation core (5GC) 160, both of which are depicted in Fig. 1A. The base station 104 may be an eNB supporting an S1 interface for communicating with the EPC 111, an ng-eNB supporting an NG interface for communicating with the 5GC 160, or a base station that supports the NR radio interface as well as an NG interface for communicating with the 5GC 160, for example. The base station 106A may be an en-gNB with an S1 interface to the EPC 111, an en-gNB that does not connect to the EPC 111, a gNB that supports the NR radio interface as well as an NG interface to the 5GC 160, or an ng-eNB that supports an EUTRA radio interface as well as an NG interface to the 5GC 160, for example. To directly exchange messages with each other as may occur during certain scenarios discussed below, the base stations 104, 106A, 106B may support an X2 or Xn interface.

Among other components, the EPC 111 may include a Serving Gateway (S-GW) 112 and a Mobility Management Entity (MME) 114. The S-GW 112 is generally configured to transfer user-plane packets related to audio calls, video calls, Internet traffic, etc., and the MME 114 is generally configured to manage authentication, registration, paging, and other related functions. The 5GC 160 may include a User Plane Function (UPF) 162, an Access and Mobility Management Function (AMF) 164, and a Session Management Function (SMF) 166. The UPF 162 is generally configured to transfer user-plane packets related to audio calls, video calls, Internet traffic, etc., the AMF 164 is generally configured to manage authentication, registration, paging, and other related functions, and the SMF 166 is generally configured to manage PDU sessions.

Fig. 1B depicts an example distributed implementation of a base station, such as the base station 104, 106A, or 106B of Fig. 1A. The base station in this implementation can include a centralized unit (CU) 172 and one or more distributed units (DUs) 174. The CU 172 is equipped with processing hardware that can include one or more general-purpose processors (e.g., CPUs) and non-transitory computer-readable memory storing machine-readable instructions executable on the one or more general-purpose processors, and/or special-purpose processing units. For example, the CU 172 may be equipped with the processing hardware 130 or the processing hardware 140. The DU 174 is likewise equipped with processing hardware that can include one or more general-purpose processors (e.g., CPUs) and non-transitory computer-readable memory storing machine-readable instructions executable on the one or more general-purpose processors, and/or special-purpose processing units. In some implementations, the processing hardware of the DU 174 includes a medium access control (MAC) controller configured to manage or control one or more MAC operations or procedures (e.g., a random access procedure) and a radio link control (RLC) controller configured to manage or control one or more RLC operations or procedures, e.g., when the base station operates as an MN, an SN or a C-SN. The processing hardware of the DU 174 may also include a PHY controller configured to manage or control one or more PHY layer operations or procedures.

Referring again to Fig. 1A, the wireless communication system 100 may include any suitable number of base stations supporting NR cells and/or EUTRA cells, for example. More particularly, the EPC 111 or the 5GC 160 can be connected to any suitable number of base stations supporting NR cells and/or EUTRA cells. In general, the techniques of this disclosure can apply to other suitable radio access and/or core network technologies, such as sixth generation (6G) radio access and/or 6G core network or 5G NR-6G DC, for example.

In some configurations or scenarios of the wireless communication system 100, the base station 104 can operate as an MeNB, an Mng-eNB, or an MgNB and either or both of the base stations 106A, 106B can operate as an SgNB or an Sng-eNB. A UE (e.g., UE 102A or 102B) can communicate with the base station 104 and the base station 106A or 106B via the same RAT, such as EUTRA or NR, or via different RATs.

In some configurations or scenarios of the wireless communication system 100, the base station 104 may be an MeNB and the base station 106A may be an SgNB, and a UE (e.g., UE 102A or 102B) can be in EUTRA-NR DC (EN-DC) with the MeNB 104 and the SgNB 106A. When the base station 104 is an Mng-eNB and the base station 106A is an SgNB, a UE can be in next generation (NG) EUTRA-NR DC (NGEN-DC) with the Mng-eNB 104 and the SgNB 106A. When the base station 104 is an MgNB and the base station 106A is an SgNB, a UE can be in NR-NR DC (NR-DC) with the MgNB 104 and the SgNB 106A. When the base station 104 is an MgNB and the base station 106A is a Sng-eNB, a UE can be in NR-EUTRA DC (NE-DC) with the MgNB 104 and the Sng-eNB 106A.

The RAN 108 may also, or instead, support CA operation. For example, the RAN 108 may be configured such that a UE (e.g., UE 102A or 102B) can communicate with a first RAN node station (e.g., base station 104 or a DU 174 thereof) via a first carrier (primary component carrier, or PCC) while communicating with a second RAN node (e.g., base station 106A or a different DU 174 of the base station 104) via a second carrier (secondary component carrier, or SCC).

In addition to (or instead of) DC and/or CA operation, the RAN 108 may support SUL and/or SDL operation. For example, the RAN 108 may be configured such that a UE (e.g., UE 102A or 102B) can communicate with a first RAN node (e.g., base station 104 or a DU 174 thereof) via a DL or UL on a carrier in a first (TDD or FDD) operating band (e.g., n40 or n70), while communicating with a second RAN node (e.g., base station 106A or a different DU 174 of the base station 104) via a SDL or SUL, respectively, in a second operating band (e.g., n67 or n80).

Fig. 2 illustrates, in a simplified manner, an example radio protocol stack 200 according to which the UE 102A or 102B can communicate with an eNB/ng-eNB or a gNB (e.g., one or more of the base stations 104, 106A, 106B). In the example stack 200, a PHY 202A of EUTRA provides transport channels to the EUTRA MAC sublayer 204A, which in turn provides logical channels to the EUTRA RLC sublayer 206A. The EUTRA RLC sublayer 206A in turn provides RLC channels to the EUTRA PDCP sublayer 208 and, in some cases, to the NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides RLC channels to the NR PDCP sublayer 210. The UE 102A or 102B, in the implementation shown in Fig. 2, supports both the EUTRA and the NR stack in order to support handover between EUTRA and NR base stations, and/or to support DC over EUTRA and NR interfaces. Further, as illustrated in Fig. 2, the UE 102A or 102B can support layering of the NR PDCP sublayer 210 over the EUTRA RLC sublayer 206A.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Where a "packet" or "data packet" is referred to herein, the packet may be an SDU or a PDU, for example.

On a control plane, the EUTRA PDCP sublayer 208 and the NR PDCP sublayer 210 can provide SRBs to exchange RRC messages, for example. On a user plane, the EUTRA PDCP sublayer 208 and the NR PDCP sublayer 210 can provide DRBs to support data exchange.

In scenarios where the UE 102A or 102B operates in EUTRA/NR DC (EN-DC), with the base station 104 operating as an MeNB and the base station 106A operating as an SgNB, the wireless communication system 100 can provide the UE 102A or 102B with an MN-terminated bearer that uses the EUTRA PDCP sublayer 208, or an MN-terminated bearer that uses the NR PDCP sublayer 210. The wireless communication system 100 in various scenarios can also provide the UE 102A or 102B with an SN-terminated bearer, which uses only the NR PDCP sublayer 210. The MN-terminated bearer can be an MCG bearer, an SCG bearer, or a split bearer. The SN-terminated bearer can be, an MCG bearer, an SCG bearer, or a split bearer. The MN-terminated bearer can be an SRB (e.g., SRB1 or SRB2) or a DRB. The SN-terminated bearer can be an SRB or a DRB.

The UEs 102A and 102B, and possibly other UEs not shown in Fig. 1A, support the UE coordination (or "multi-UE") techniques discussed herein, in which two or more UEs can efficiently pool resources to share responsibility for UL and/or DL communications with the RAN 108, and exchange control information and/or data with each other via the pairing link to support the coordinated UE operation. The UEs 102A and 102B may be personal devices associated with a single user, for example, thereby mitigating any privacy concerns that may arise, and generally making it more likely that a device user will want to permit coordination/sharing. For example, the UE 102A may be a smartphone of a user, and the UE 102B may be a smart watch of the same user, or a portable router device (e.g., a smart accessory or "puck" device) of the same user. As another example, the UE 102A may be a smartphone or smart watch of a user, and the UE 102B may be a communications device that is integrated in a vehicle in which the same user is a passenger. Coordination of communication responsibilities among such devices can provide various benefits, such as extended battery life, mitigation of SAR compliance issues (e.g., if the UE 102B is an accessory/puck device that is further from the user and used for UL communications), better interference tolerance (e.g., if the UEs 102A and 102B, and therefore their respective antennas, are spatially separated by a significant distance), load balancing, and/or extended communication range (e.g., if the UE 102B is an accessory/puck or other device with higher antenna gain or transmit power capabilities than the UE 102A).

To support the techniques discussed herein, the coordinating UEs 102A, 102B use their respective pairing link controllers 154A, 154B to pair with each other (e.g., to establish a ProSe sidelink, Bluetooth link, or Wi-Fi Direct link), and use their respective cell link controllers 152A, 152B to communicate with the RAN 108 in accordance with their shared responsibilities (e.g., UL-only, DL-only, or both UL and DL, and on a particular frequency or frequencies, as discussed further below). In some implementations, one of the UEs acts as an intermediary between the RAN 108 and the other UE(s) for purposes of coordinating shared UL and/or DL communications with the RAN 108. For ease of explanation, the following description will primarily refer to the UE 102A as an intermediary UE, and the UE 102B as the sole other, coordinating UE. In other implementations and/or scenarios, however, the UE 102B may act as the intermediary, and/or three or more UEs may coordinate according to the principles disclosed herein.

Further, in some implementations, the principles disclosed herein can instead be applied in non-cellular wireless communication systems, such as satellite communication systems. For example, the RAN 108 may instead be a satellite communication network, base stations 104, 106A, and 106B may instead be satellite nodes, and controllers 132, 142, 152A, and 152B may instead be satellite link controllers. For ease of explanation, however, the following discussion focuses primarily on an embodiment that includes a cellular network, such as that shown in Fig. 1A.

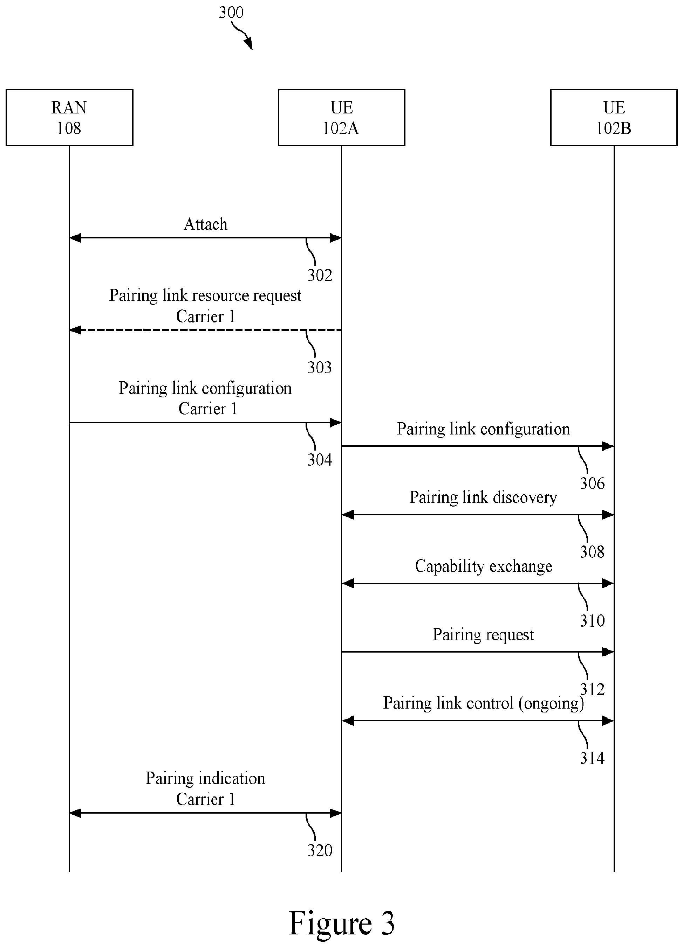

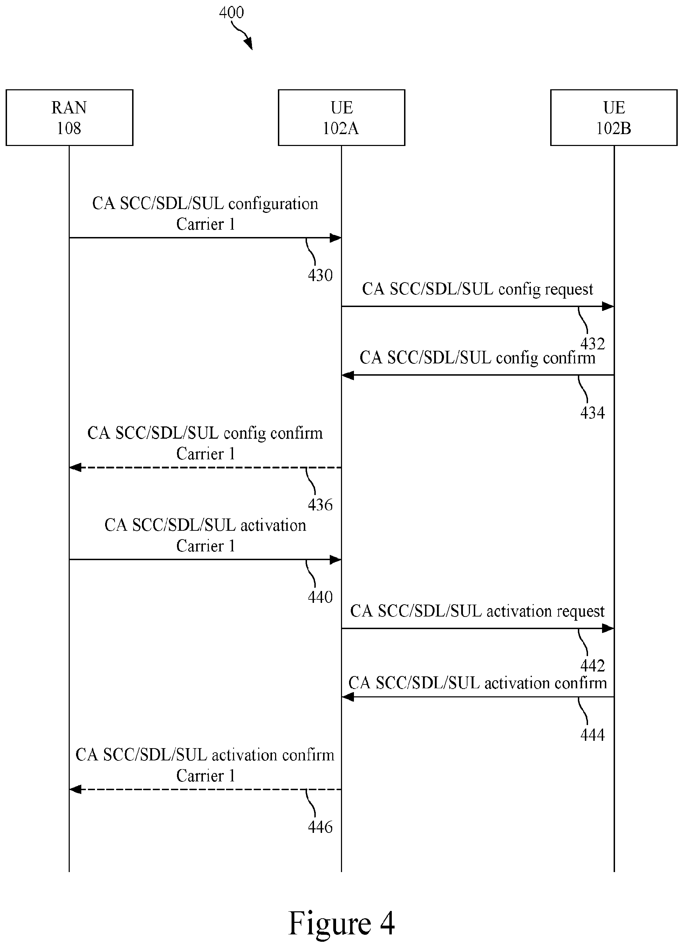

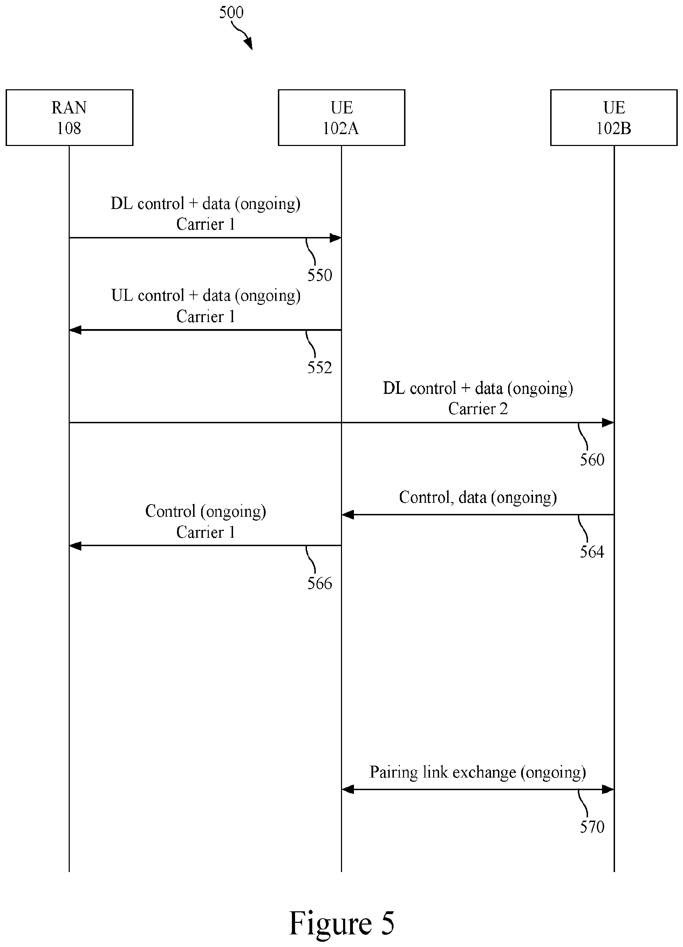

Multi-UE operation will now be described in further detail with reference to the messaging diagrams of Figs. 3-8. Fig. 3 depicts an example pairing procedure between the UEs 102A, 102B (before multi-UE operation begins), Fig. 4 depicts a procedure in which the RAN 108 (with the assistance of UE 102A) configures the UE 102B for multi-UE operation, and Figs. 5-8 depict different ways in which the UEs 102A and 102B can share communication responsibilities during multi-UE operation, in various implementations and/or scenarios. In general, the UEs 102A, 102B (possibly with one or more additional UEs) can cooperate to handle communications with the RAN 108 in different directions (UL versus DL) and/or on different frequencies. From the perspective of the RAN 108, the UEs 102A, 102B may appear to be a single UE when in multi-UE operation, or separate UEs, depending on the implementation and as discussed in further detail below.

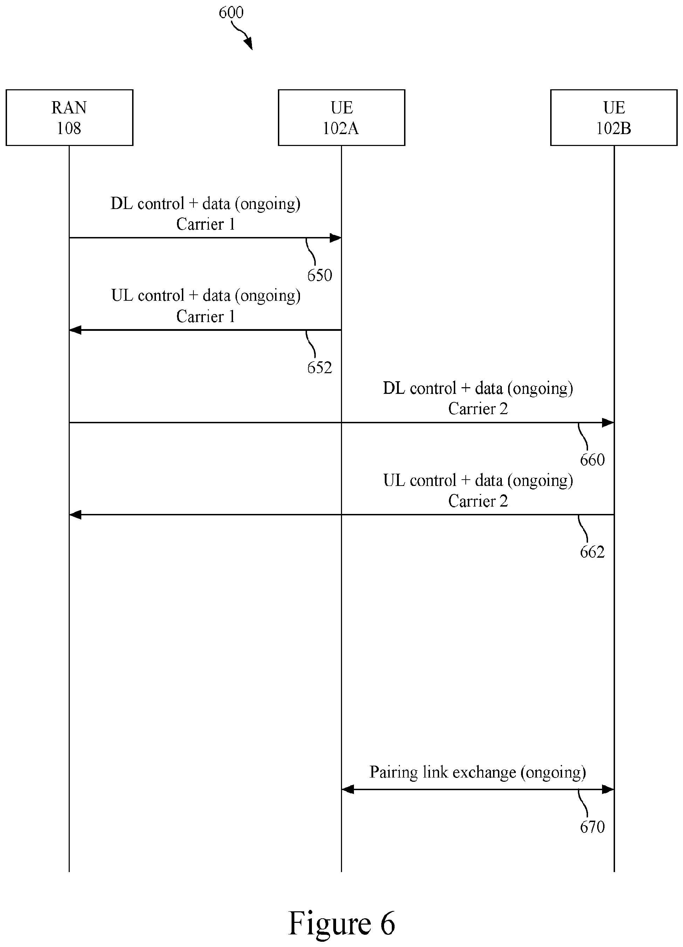

In general, events in Figs. 3-8 that may be similar are labeled with similar reference numbers (e.g., event 550 may be similar to event 650 and 850), with differences discussed below if and where appropriate. With the exception of the differences shown in the figures and/or discussed below, any of the alternative implementations discussed with respect to a particular event (e.g., for messaging and processing) may apply to events labeled with similar reference numbers in other figures. While the below description of Figs. 3-8 refers to specific components of the wireless communication system 100 (e.g., RAN 108 and UEs 102A, 102B), the operations may instead be performed by components other than those shown in Fig. 1A. Moreover, while Figs. 3-6 refer to the UE 102A communicating with a "first RAN node" of RAN 108 for both UL and DL communications, and Fig. 6 refers to the UE 102B communicating with a "second RAN node" of RAN 108 for both UL and DL communications, it is understood that, in such implementations and/or scenarios, the UE 102A may instead communicate with different nodes of the RAN 108 for the UL and the DL, and/or the UE 102B may instead communicate with different nodes of the RAN 108 for the UL and the DL. In some implementations, the UEs 102A and 102B can communicate with the same node of RAN 108 in the scenarios of Figs. 5-8 (i.e., such that the "first RAN node" and "second RAN node" are the same node).

Fig. 3 shows a scenario 300 in which the UE 102A, while connected to the RAN 108, pairs with the UE 102B via a pairing link (e.g., via a ProSe sidelink, Bluetooth link, Wi-Fi Direct link, or other type of link supported by the pairing link controllers 154A, 154B). In the scenario 300, the UE 102A and a first node of RAN 108 (e.g., base station 104 or a DU 174 thereof) perform 302 an attach procedure (e.g., during initial access by the UE 102A to the RAN 108 via the cell 124). At some point thereafter, the UE 102A optionally sends 303 the first RAN node a request for pairing link (e.g., ProSe sidelink) resources via a first carrier ("Carrier 1"). The UE 102A may send 303 the request in response to determining to initiate or attempt multi-UE operation, for example. In other implementations and/or scenarios, the UE 102A may send 303 the request independently of (e.g., long before) any decision to begin or attempt multi-UE operation. In other implementations and/or scenarios, event 303 is omitted.

In response to the request at event 303 (or in other implementations/scenarios, autonomously), the first RAN node sends 304 a pairing link (e.g., ProSe sidelink) configuration to the UE 102A via Carrier 1. As the term is used herein, a "carrier" may refer to a single carrier frequency, or to paired UL/DL carrier frequencies (e.g., in an FDD operating band). Thus, while each of Figs. 3-6 shows that a single "carrier" (Carrier 1) is used for communications between the RAN 108 and UE 102A in both the UL and DL directions, it is understood that those UL and DL communications may be on different frequencies (FDD operation) or the same frequency (TDD operation), depending on the implementation and/or scenario. In still other implementations and/or scenarios, the UL and DL for UE 102A in any of Figs. 3-6 may instead use frequencies in different operating bands.

The pairing link configuration can include resources (e.g., time and/or frequency resources) that the UE 102A can use for establishing a pairing link with one or more other UEs. After (e.g., in response to) event 304, the UE 102A sends/forwards 306 the pairing link configuration to the UE 102B. In some implementations, event 306 is a broadcast transmission, by the UE 102A, of a message or other signal (e.g., when the UE 102A advertises in a pairing link discovery process), rather than a message intended specifically for UE 102B. In some implementations (e.g., if the pairing link is a Bluetooth, Wi-Fi Direct, or other link for which resources are not configured by the RAN 108), event 304 is omitted. In still other implementations and/or scenarios, the RAN 108 broadcasts a message at event 304 (e.g., a cell advertisement), the broadcast message is received by both UE 102A and UE 102B, and event 306 is omitted.

After the UE 102B receives the pairing link configuration (e.g., in Fig. 3, at event 306), the UE 102A and UE 102B perform 308 a pairing link discovery process according to the pairing link configuration and the communication protocol of the pairing link controllers 154A, 154B (e.g., ProSe sidelink, Bluetooth, or Wi-Fi Direct). After the UE 102A and UE 102B discover each other, the UEs 102A and 102B can exchange 310 UE capability information. Alternatively, the exchange 310 may occur at a later time, after pairing. The UE capability information sent by a given UE can include information indicative of cellular capabilities of the sending UE, some or all of which may be useful when determining how to share/allocate multi-UE communication responsibilities between the UEs 102A, 102B (as discussed further below). For example, a UE capability message sent by the UE 102A and/or 102B may indicate which radio access technologies (RATs) the sending UE supports (e.g., LTE, EUTRA, NR, etc.), which operating bands the sending UE supports, the transmit and/or receive antenna configuration of the sending UE, and/or the transmitter and/or receiver configuration of the sending UE (e.g., MIMO capabilities, the number of transmitters, the number of receivers, etc.). In some implementations, one or both of the UE capability messages also include pairing link capability information of the sending UE, such as a list or other indication of which pairing link communication protocols are supported by the sending UE (e.g., whether the sending UE supports ProSe sidelinks, Bluetooth, and/or Wi-Fi Direct). In some implementations, one or both UE capability messages explicitly indicate whether the sending UE supports coordinated communications (i.e., multi-UE operation) using a pairing link. In other implementations, such support can be implicitly indicated (e.g., by the sending UE including an indication of supported pairing link communication protocols in its UE capability message).

At some time after event 308, and possibly also after event 310, the UE 102A sends 312 a pairing request to the UE 102B via the pairing link. The UE 102B may optionally send the UE 102A a message (not shown in Fig. 3) accepting/confirming the pairing request via the pairing link. After event 312 (and any confirmation from the UE 102B), the UE 102A and UE 102B are paired and exchange 314 pairing link control information in an ongoing (e.g., periodic and/or as needed) manner. Optionally, before or during event 314, the UE 102A sends 320 a pairing indication to the first RAN node via Carrier 1, to inform the RAN 108 that the UE 102A and UE 102B have paired. In some implementations, the UE 102A can also, or instead, send the first RAN node an indication when the UEs 102A, 102B become unpaired. Moreover, the UE 102A and/or 102B can, in some implementations and/or scenarios (e.g., at a later time, after multi-UE operation has begun) send the RAN 108 pairing link capability information (e.g., the pairing link capability information discussed above with reference to event 310) for both UEs or for the sending UE.

Fig. 4 depicts an example scenario 400 in which, after the UEs 102A, 102B have paired (e.g., after scenario 300), the RAN 108 and the UEs 102A, 102B collectively set up multi-UE operation. Specifically, in the depicted scenario 400, the paired UEs 102A, 102B arrange to pool their resources to handle communications on multiple (in this case, two) carriers provided by the RAN 108 for CA, SDL, or SUL operation. While the RAN 108 is involved in the procedure shown in Fig. 4, it is understood that the RAN 108 may or may not be aware that the UEs 102A, 102B are in the process of establishing multi-UE operation, depending on the implementation. For example, the RAN 108 may be unaware of the multi-UE operation, and generally behave as though some or all of the communications to or from the UEs 102A, 102B are communications to or from the same, single UE (e.g., as discussed further below).

At some point in time, the first RAN node sends 430 a configuration message to the UE 102A via Carrier 1. The configuration message includes a configuration to be used for communicating via another carrier (e.g., a SCC for CA operation, a SDL carrier, or a SUL carrier), labeled in the figures as "Carrier 2." For example, the configuration may include a random access channel (RACH) configuration for Carrier 2, where the RACH configuration specifies RACH resources such as a PRACH time and/or frequency resource, and/or a preamble sequence.

Similar to Carrier 1, Carrier 2 may be a single carrier frequency, or (in some implementations and scenarios where the UE 102B is assigned both an UL and DL, such as Fig. 6 discussed below) may represent paired UL/DL carrier frequencies (e.g., in an FDD operating band). Carriers 1 and 2 may be different carriers in the same operating band, or may be in different operating bands.

After (e.g., in response to) event 430, the UE 102A uses the pairing link to send 432 the UE 102B a configuration request that includes the configuration from the configuration message of event 430, to configure the UE 102B to support Carrier 2. The UE 102B responds by using the pairing link to send 434 a configuration confirmation message indicating that the UE 102B can, and/or agrees to, communicate via Carrier 2 according to the provided configuration. In an alternative scenario, event 434 is omitted, and the UE 102B instead either (1) responds by sending a message indicating that the UE 102B will not or cannot communicate via Carrier 2 according to the provided configuration, or (2) does not send any responsive message to the UE 102A. In some implementations, the UE 102B is not configured to send any confirmation message, and event 434 is omitted in all scenarios.

In alternative implementations and/or scenarios, event 430 occurs before the UE 102A has paired with the UE 102B via the pairing link (e.g., before event 303, 304, 306, 308, 310, 312, 314, and/or 320 of Fig. 3). In any case, the UEs 102A and 102B are paired with each other before event 432 occurs, so that the UE 102A can use the pairing link to send the configuration request.

Optionally, the UE 102A may then send 436, via Carrier 1, the first RAN node a message confirming configuration for CA, SDL, or SUL operation on Carrier 2. At a later time, the RAN 108 (e.g., base station 104) sends 440 an activation message to the UE 102A via Carrier 1. The activation message indicates to the UE 102A that CA, SDL, or SUL operation is to begin. In response to receiving the activation message, the UE 102A uses the pairing link to send 442 the UE 102B an activation request message, to indicate to the UE 102B that multi-UE operation is to begin. The UE 102B responds by using the pairing link to send 444 the UE 102A an activation confirmation message indicating that the UE 102B can, and/or agrees to, begin communicating via Carrier 2 according to the provided configuration. In an alternative scenario, event 444 is omitted, and the UE 102B instead either (1) responds by sending a message indicating that the UE 102B does not agree to begin communicating via the second carrier according to the provided configuration, or (2) does not send any responsive message to the UE 102A. In some implementations, the UE 102B is not configured to send any confirmation message, and event 444 is omitted in all scenarios.

Optionally, the UE 102A may then send 446, via Carrier 1 to the first RAN node, a message confirming activation of CA, SDL, or SUL operation. After event 444 and/or 446 (or after event 442 if events 442 and 444 are omitted), the UEs 102A and 102B can operate in a coordinated manner, with the UE 102A handling DL and/or UL communications on Carrier 1, the UE 102B handling DL and/or UL communications on Carrier 2, and UE 102A and UE 102B communicating with each other directly as described below. As noted above, Carrier 1 and Carrier 2 may be in different operating bands. Generally, significant frequency separation between Carrier 1 and Carrier 2 can provide important benefits, such as more robust performance (e.g., less degradation of performance as a result of interference in a given band). In some implementations, for example, Carrier 1 and Carrier 2 are in different frequency ranges (FR1 or FR2), such that the UEs 102A, 102B collectively act as an FR1 + FR2 stand-alone (SA) device. In some alternative implementations, however, Carrier 1 and Carrier 2 (in Figs. 3-8) are instead the same frequency (e.g., with UE 102A handling the UL in a TDD band and UE 102B handling the DL in the TDD band).

As noted above, Figs. 5-8 depict different ways in which the UEs 102A and 102B may share communication responsibilities during multi-UE operation, in various implementations and/or scenarios. The scenario of any one of Figs. 5-8 may occur after event 442, 444, and/or 446, for example.

Referring first to Fig. 5, in an example scenario 500, the first RAN node (discussed above in connection with Figs. 3 and 4) sends 550 DL data and control information to the UE 102A, and the UE 102A sends 552 the first RAN node UL data and control information, on Carrier 1. However, the UE 102B only communicates unidirectionally with a second node of RAN 108 (e.g., base station 106A or a different DU 174 of base station 104), in the DL direction and on Carrier 2. That is, the UE 102B receives control information and data from the second RAN node at event 560, but does not transmit any information directly to the RAN 108.

Because the UE 102B is not assigned an UL in the scenario 500, the UE 102B can, in some implementations, send 564, to the RAN 108, data and control information via the UE 102A and the pairing link. The control information can include, for example, ACK/NACK messages indicating whether the UE 102B properly received and decoded a message from the RAN 108 via Carrier 2 during event 560. As another example, the control information can include channel quality information (CQI) and/or channel state information (CSI) indicating the quality of one or more reference signals that the UE 102B received from the RAN 108 via Carrier 2 during event 560. The UE 102A can then send/forward 566 some or all of the control information from the UE 102B to the first RAN node. The data sent by the UE 102B to the UE 102A at event 564 may include UL data that the UE 102B desires to send to the RAN 108 (but cannot due to the lack of an UL on Carrier 2).

In implementations and scenarios where the UEs 102A and 102B communicate with different base stations of the RAN 108, the base stations may exchange the control information received at event 566 as needed. For example, if the UE 102B receives data from the base station 106A at event 560, the UE 102B may send an ACK message to the UE 102A at event 564, the UE 102A may forward the ACK message to the base station 104 at event 566, and the base station 104 may forward the ACK message to the base station 106A via an X2 or Xn interface. Similarly, the base station 104 may forward CQI and/or CSI that originated from the UE 102B to the base station 106A via an X2 or Xn interface.

As seen in Fig. 5, the UEs 102A and 102B may also exchange 570 other information over the pairing link, in addition to the control information and data of event 564. For example, event 570 may represent the communication of pairing link control information (e.g., as in event 314 of Fig. 3). Moreover, the UE 102B may, at event 570, send the UE 102A some or all of the DL data that the UE 102B received from the second RAN node at event 560. For example, if the UE 102A initiated multi-UE operation in order to utilize the radio(s) of UE 102B purely in a support capacity, the UE 102B may forward all data it receives from the second RAN node on Carrier 2 (during event 560) to the UE 102A via the pairing link.

While events 550, 552, 560, 560, and 566 are shown as discrete communications occurring in a specific order in Fig. 5 for clarity, the events may be ordered differently and/or overlap with each other.

Referring next to Fig. 6, in an example scenario 600, the first RAN node (discussed above in connection with Figs. 3 and 4) sends 650 DL data and control information to the UE 102A, and the UE 102A sends 652 the first RAN node UL data and control information on Carrier 1. Whereas Fig. 5 relates to a scenario 500 in which the UE 102B is configured to communicate on Carrier 2 in only the DL direction, in scenario 600 the UE 102B (like the UE 102A) communicates bidirectionally with the second RAN node. More specifically, the UE 102B receives 660 DL data and control information from the second RAN node on Carrier 2, and sends 662 UL data and control information to the second RAN node. In some implementations and/or scenarios, the UE 102B does not transmit any UL data at event 662 (e.g., the UE 102B may use the UL of Carrier 2 strictly for control information).

Because UEs 102A, 102B are each assigned an UL and a DL in the scenario 600, each UE can provide its own control information (e.g., ACK/NACK messages, CQI and/or CSI, etc.) to the RAN 108. However, the UEs 102A and 102B can still exchange 670 information via the pairing link, such as pairing link control information (e.g., as in event 314). As another example (e.g., if the UE 102A initiated multi-UE operation in order to utilize the radio(s) of UE 102B purely in a support capacity), the UE 102B may at event 670 forward all data it receives from the second RAN node on Carrier 2 (during event 660) to the UE 102A via the pairing link.

While events 650, 652, 660, 662, and 670 are shown as discrete communications occurring in a specific order in Fig. 6 for clarity, the events may be ordered differently and/or overlap with each other.

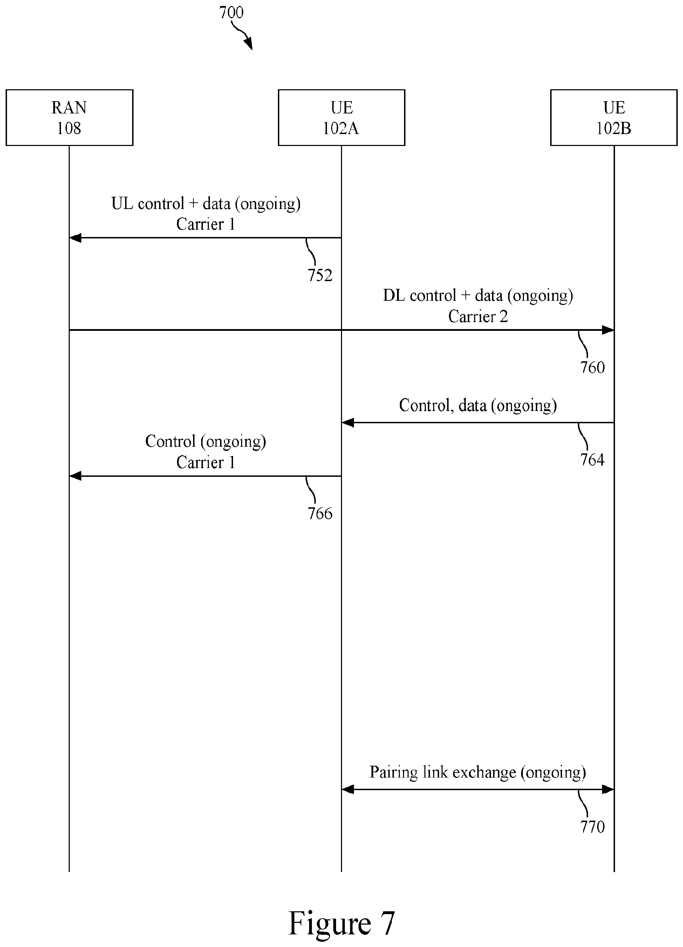

Referring next to Fig. 7, in an example scenario 700, the UE 102A sends 752 the first RAN node (discussed above in connection with Figs. 3 and 4) UL data and control information on Carrier 1, but does not receive data or control information on a DL. The UE 102B (like the UE 102A) communicates unidirectionally with the RAN 108, but in the DL rather than the UL direction. More specifically, the UE 102B receives 760 DL data and control information from the second RAN node on Carrier 2. Because the UE 102B is not assigned an UL in the scenario 700, the UE 102B can send 764 data and control information to the UE 102A via the pairing link (e.g., similar to event 564), and the UE 102A can send/forward 766 control information to the first RAN node via Carrier 1 (e.g., similar to event 566).

In implementations and scenarios where the UEs 102A and 102B communicate with different RAN nodes (i.e., where the first and second RAN nodes discussed above are different nodes of the RAN 108), the different RAN 108 nodes may exchange the control information from event 766 as needed (e.g., as discussed above with reference to Fig. 5).

As seen in Fig. 7, the UEs 102A and 102B may also exchange 770 other information over the pairing link, in addition to the control information and data of event 764. For example, event 770 may represent the communication of pairing link control information (e.g., as in event 314 of Fig. 3), and/or DL data that the UE 102B received from the second RAN node at event 760. For example, if the UE 102A initiated multi-UE operation in order to utilize the radio(s) of UE 102B purely in a support capacity, the UE 102B may at event 770 forward all data it receives from the second RAN node on Carrier 2 (during event 760) to the UE 102A via the pairing link.

While events 752, 760, 764, 766, and 770 are shown as discrete communications occurring in a specific order in Fig. 7 for clarity, the events may be ordered differently and/or overlap with each other.

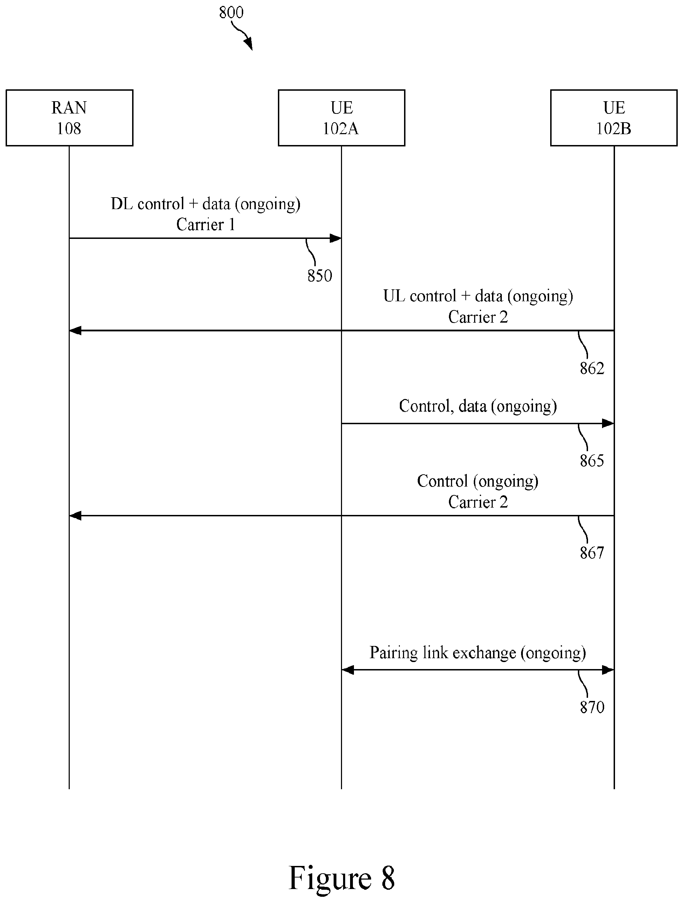

Referring next to Fig. 8, in an example scenario 800, the first RAN node (discussed above in connection with Figs. 3 and 4) sends 850 the UE 102A DL data and control information on Carrier 1, but does not receive UL information from the UE 102A. The UE 102B (like the UE 102A) communicates unidirectionally with the RAN 108, but in the UL rather than the DL direction (i.e., the opposite of scenario 700). More specifically, the UE 102B sends 862 UL data and control information to the second RAN node on Carrier 2.

Because the UE 102A is not assigned an UL in the scenario 800, the UE 102A can send 865 data and control information to the UE 102B via the pairing link (e.g., similar to event 564 but in the reverse direction), and the UE 102B can send/forward 867 control information to the second RAN node on Carrier 2. In implementations and scenarios where the UEs 102A and 102B communicate with different RAN nodes (i.e., where the first and second RAN nodes discussed above are different nodes of the RAN 108), the RAN 108 nodes may exchange the control information from event 867 as needed (e.g., as discussed above with reference to Fig. 5). As seen in Fig. 8, the UEs 102A and 102B may also exchange 870 other information over the pairing link, in addition to the control information and data of event 865. For example, event 870 may represent the communication of pairing link control information (e.g., as in event 314 of Fig. 3).

While events 850, 862, 865, 867, and 870 are shown as discrete communications occurring in a specific order in Fig. 8 for clarity, the events may be ordered differently and/or overlap with each other.

Other implementations and/or scenarios, other than those reflected in Figs. 5-8, are also possible. For example, the RAN 108 may provide CA or SUL operation to the UEs 102A, 102B, with the UE 102A handling a DL and UL (on the same frequency using TDD, or on two frequencies using FDD), and with the UE 102B handling a UL on a different frequency (e.g., in a SUL operating band such as n80). In other examples, the UL, DL, and carrier/frequency assignments in Fig. 5 may be reversed (e.g., with the UE 102B handling the Carrier 1 UL and DL and the UE 102A handling the Carrier 2 DL), or the UE 102B may handle the UL rather than the DL on Carrier 2 in Fig. 5, etc.

In some implementations and/or scenarios, the UEs 102A, 102B (and possibly one or more other UEs) coordinate to divide responsibilities for communicating on different carriers when operating in DC, rather than CA or SDL/SUL. For example, Carrier 1 and Carrier 2 of Fig. 6 may be DC carriers (with each "carrier" using one or two frequencies based on whether TDD or FDD is implemented for that carrier). Moreover, in some DC implementations, the UEs 102A and 102B can split UL and DL responsibilities for a single DC "carrier" among themselves, with control and data being exchanged as needed between the UEs over the pairing link (e.g., similar to the exchanges of event 570, 670, or 870).

Multi-UE, DC operation may use different radio bearer combinations, depending on the implementation. For example, the RAN 108 may use a bearer specific to UE 102A, a bearer specific to UE 102B, or a split bearer for both UE 102A and UE 102B. In split bearer implementations, the UE 102A may aggregate data (i.e., with the UE 102B forwarding any data it receives to UE 102A via the pairing link).

In some implementations and/or scenarios, the DC operation is EN-DC operation. For example, the UE 102A and UE 102B may coordinate such that the UE 102A operates on a 4G anchor carrier and the UE 102B operates on a 5G carrier, or vice versa. The UE 102A and UE 102B can then use the pairing link to exchange 4G UL and/or DL control information, as well as 5G UL and/or DL data (e.g., at event 570, 670, 770, or 870), for example.

In any of the implementations/scenarios discussed above (e.g., with CA, SDL, SUL, or DC operation) where the UE 102B is handling only UL communications, the DL can be established in a conventional manner (e.g., with UE 102A using a synchronization signal block (SSB) from the RAN 108 to lock onto the DL signal), and the UL to the RAN 108 (e.g., to base station 104 or a DU 174 thereof) can be controlled by timing advance (TA) in a conventional manner. Because the UE 102B has no DL assignment, the RAN 108 (e.g., the first base station discussed above with reference to Figs. 3-8) sends the TA to the UE 102A, which in turn forwards the TA to the UE 102B via the pairing link to enable the UE 102B to apply the TA for its UL communications. In some scenarios, the UE 102A transmits not only the most recent TA update to the UE 102B, but also the initial timing information that the UE 102A had received from the RAN 108, to allow the UE 102B to derive the appropriate UL timing.

Additionally or alternatively, for any of the implementations/scenarios discussed above, the UEs 102A and 102B can exchange additional types of information via the pairing link during multi-UE operation (e.g., at event 570, 670, 770, or 870). For example, the UE 102B may use the pairing link to send the UE 102A (and/or the UE 102A may send the UE 102B) any of the capability information described above with reference to event 310, or an update to that capability information, and vice versa. As yet another example, the UE 102A may use the pairing link to send the UE 102B one or more configuration messages assigning specific tasks or responsibilities to the UE 102B, such as updates to the carrier on which the UE 102B is to communicate (and possibly whether that communication is to be both UL and DL, UL-only, or DL-only).

Additionally or alternatively, for any of the implementations/scenarios discussed above, the UEs 102A, 102B may exchange UL grant information. For example, if the UE 102A and UE 102B handle the DL and UL, respectively (e.g., in an FDD operating band), the UE 102A may use the pairing link to send/forward UL grants (e.g., in DCI) from the RAN 108 to the UE 102B. As another example, if the UE 102A and 102B handle different (first and second) carriers (e.g., in different operating bands), respectively, and if the RAN 108 supports cross-carrier scheduling, the UE 102A can use the pairing link to forward UL and/or DL grants for the second carrier (e.g., in DCI that the UE 102A receives from the RAN 108 on the first carrier) to the UE 102B, or the UE 102B can use the pairing link to forward UL and/or DL grants for the first carrier (e.g., in DCI that the UE 102B receives from the RAN 108 on the second carrier) to the UE 102A.

Also in any of the implementations/scenarios discussed above (e.g., with CA, SDL, SUL, or DC operation), each of the UEs 102A, 102B can be associated with its own device identifier, such as an embedded subscriber identity module (eSIM). In a first implementation, the UEs 102A and 102B coordinate to select, or the UE 102A autonomously selects, one of the two device identifiers to serve as a "group" identifier for both UEs 102A, 102B collectively, or one of the device identifiers (e.g., the UE 102A device identifier) is by default used as the group identifier. Both the UE 102A and the UE 102B can then use this group identifier (e.g., group eSIM) for authentication purposes, i.e., by one or both UEs sending the group identifier to the RAN 108. In the example radio protocol stack 200 of Fig. 2, the two UE device identifiers may be merged into the single group identifier at the L2 layers (i.e., the MAC layer 204A and/or 204B, the RLC layer 206A and/or 206B, and the PDCP layer 208 and/or 210), for example. If the pairing link has a sufficiently wide bandwidth, the two UE device identifiers may also be merged into the single group identifier at the PHY layer 202A and/or 202B. In implementations that use group identifiers, the RAN 108 may assign a single G-RNTI that is used/shared by both UEs 102A, 102B.

In an alternative, second implementation, the UEs 102A and/or 102B each notify the RAN 108 of their own device identifier (e.g., eSIM), or the UE 102A notifies the RAN 108 of both device identifiers, and the network (RAN 108 and/or CN 110) treats the two UEs 102A, 102B as distinct UEs/entities for authentication purposes, but then merges the two device identifiers in the UE context. For example, the RAN 108 may use RRC/NAS messaging to forward SCC control information to the UE 102B (e.g., directly or via the UE 102A). In implementations that use separate identifiers rather than a group identifier, the RAN 108 may assign different G-RNTIs to the UE 102A and UE 102B. The second implementation may preserve privacy better than the first implementation, but the first implementation may allow for less complex network-side operations than the second implementation.

Also in any of the implementations/scenarios discussed above (e.g., with CA, SDL, SUL, or DC operation), the UE 102A (autonomously, or in cooperation with UE 102B) may select (assign or reassign) which of the UEs handles which carrier (e.g., PCC or SCC, or which of multiple SCCs), and/or which of the UEs handles the UL or DL on a particular carrier, based on various factors. This selection may be made prior to multi-UE operation (e.g., before event 432) and/or after multi-UE operation has begun (e.g., after event 444, and possibly after at least a portion of each event shown in Fig. 5, 6, 7, or 8). To this end, the UE 102A and UE 102B can use the pairing link to exchange resource partitioning information (e.g., at event 570, 670, 770, of 870), which one or both UEs can use to dynamically determine or update which UE will be assigned to which carrier, and/or which UE will be assigned UL, DL, or both UL and DL communications on a particular carrier. The exchange may be performed on a periodic or other suitable basis.

For example, the UE 102B may use the pairing link to send the UE 102A information indicative of cellular link conditions/quality for UE 102B (e.g., signal quality on Carrier 2 in one of Figs. 5-8), the battery status of UE 102B, the buffer status of the UE 102B, SAR limits and/or power backoff requirements for UE 102B, and/or temperature of UE 102B. The UE 102A may then use this information, and possibly similar information relating to itself (e.g., signal quality on Carrier 1 in one of Figs. 5-8, battery status of UE 102A, buffer status of UE 102A, SAR limits and/or power backoff requirements for UE 102A, and/or temperature of UE 102A), to assign or reassign carriers and/or UL/DL communications to the UE 102B and/or UE 102A. For example, the UE 102A may compare its own battery state and signal condition to the battery state and signal condition of the UE 102B, and assign or reassign responsibility for communications on a particular carrier based on the relative levels of the battery states and signal conditions. Alternatively, the UE 102A and UE 102B can exchange resource partitioning information on the pairing link, and the UE 102A and UE 102B can jointly determine which UE handles which carrier or link direction(s), e.g., by exchanging negotiation messages on the pairing link, or by each UE autonomously deciding which carrier or link direction(s) to handle based on the received resource partitioning information and a shared set of predetermined rules, etc.

In some implementations where the UEs 102A and 102B (and possibly other UEs) have a merged, "group" identifier (e.g., eSIM), the UEs can manage security/encryption and sequence numbers among themselves (or centrally at the UE 102A), with no notification to the RAN 108. If the RAN 108 is only aware of a merged group identifier, the RAN 108 may need to manage any restart of security/encryption and sequence numbers.

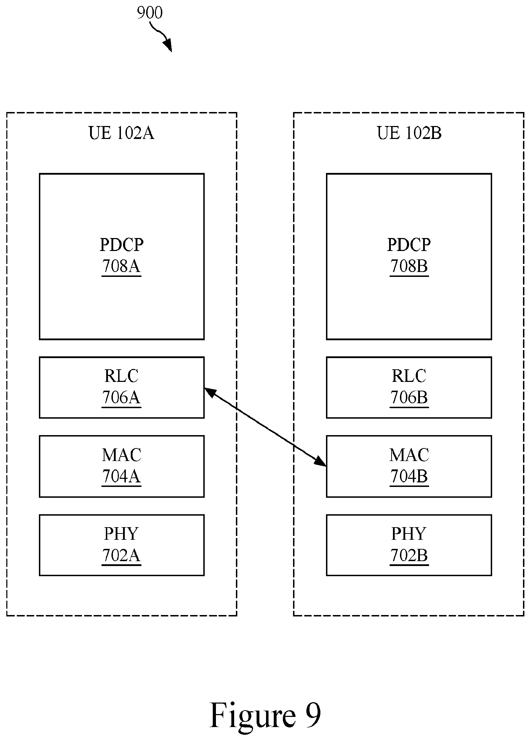

Fig. 9 illustrates an example protocol stack split 900 according to which the UEs 102A, 102B of Fig. 1A can operate when techniques of this disclosure for multi-UE operation are implemented. Protocol layers 702A, 704A, 706A, and 708A as implemented by UE 102A, and protocol layers 702B, 704B, 706B, and 708B as implemented by UE 102B, may be the corresponding EUTRA or NR layers shown in Fig. 2. For example, the depicted layers for UE 102A and 102B may all be the EUTRA layers 202A, 204A, 206A, 208 from Fig. 2, the NR layers 202B, 204B, 206B, 210 from Fig. 2, or a combination thereof (e.g., with the UE 102A layers being NR layers 202B, 204B, 206B, 210 and the UE 102B layers being EUTRA layers 202A, 204A, 206A, 208).

As seen in Fig. 9, the multi-UE operation disclosed herein may involve a stack split between the RLC layer 706A of UE 102A and the MAC layer 704B of UE 102B. Thus, for example, the MAC layer 704B of UE 102B and RLC layer 706A of UE 102A can share MAC and RLC layer information via communications on the pairing link. Additionally, in some implementations, the two MAC layers 704A, 704B can share MAC layer information via communications on the pairing link. Further still, in some implementations where the UEs 102A, 102B are viewed as a single UE by the RAN 108, the two PHY layers 702A, 702B can share PHY layer information via communications on the pairing link.

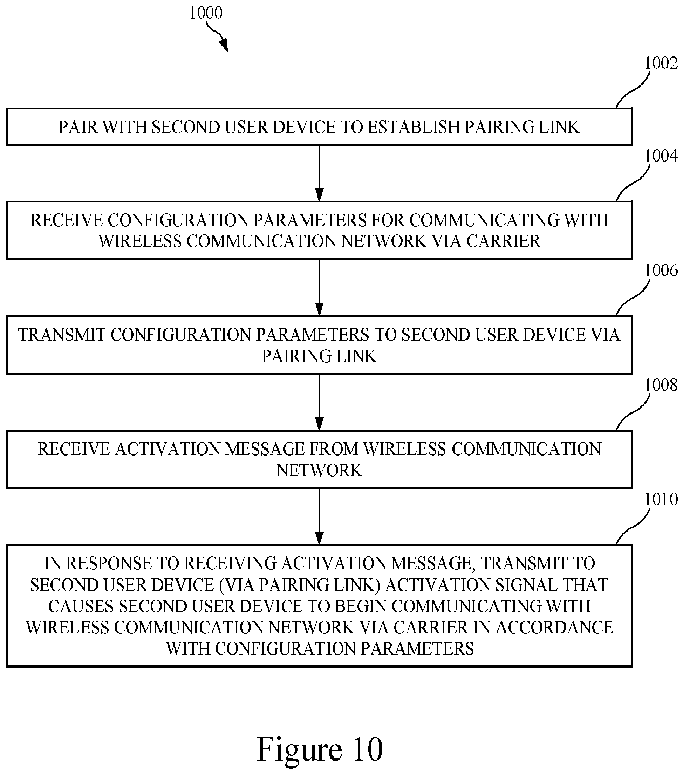

Fig. 10 is a flow diagram of an example method 1000, implemented by a user device (e.g., UE 102A of Fig. 1A), for coordinating with one or more other user devices to facilitate communications with a wireless communication network (e.g., RAN 108 of Fig. 1A). At block 1002, the user device pairs with a second user device (e.g., UE 102B of Fig. 1A) to establish a pairing link (e.g., events 308-312, possibly also including event 306 and/or a portion of 314). At block 1004, the user device receives, from a wireless communication network (e.g., from a node of the RAN 108, such as the base station 104 or a DU 174 thereof) configuration parameters for communicating with the wireless communication network via one or more frequencies (e.g., event 430). At block 1006, the user device transmits the configuration parameters to the second user device via the pairing link (e.g., event 432). At block 1008, the user device receives an activation message from the wireless communication network (e.g., event 440). At block 1010, the user device, in response to receiving the activation message at block 1008, transmits (via the pairing link) an activation signal to the second user device (e.g., event 442), to start the second user device communicating with the wireless communication network via the one or more frequencies in accordance with the configuration parameters.

Some of the operations shown in Fig. 10 may not occur in the order shown, depending on the implementation and/or scenario. For example, block 1002 may occur between blocks 1004 and 1006, etc. Moreover, the method 1000 may include one or more additional blocks not shown in Fig. 10. For example, block 1006 may include transmitting a configuration request message including the configuration parameters to the second user device, and the method 1000 may include an additional block in which, in response to transmitting the configuration request message, the user device receives from the second user device a configuration confirmation message (e.g., event 434). As another example, block 1010 may include transmitting an activation request message to the second user device, and the method 1000 include an additional block in which, in response to transmitting the activation request message, the user device receives from the second user device an activation confirmation message (e.g., event 444).

The following additional considerations apply to the foregoing discussion.

A user device in which the techniques of this disclosure can be implemented (e.g., the UE 102A or UE 102B) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for multi-UE operation through the principles disclosed herein. Thus, while particular embodiments and applications have been illustrated and described, it is to be understood that the disclosed embodiments are not limited to the precise construction and components disclosed herein. Various modifications, changes and variations, which will be apparent to those of ordinary skill in the art, may be made in the arrangement, operation and details of the method and apparatus disclosed herein without departing from the scope defined in the appended claims.

## Claims

1. A method performed by a first user device coordinating with one or more other user devices to facilitate communications with a wireless communication network, the method comprising:
pairing (303, 570, 670, 770, 870, 1002) with a second user device to establish a pairing link for sharing resources used in communication with the wireless communication network;
receiving (304, 430, 1004), from the wireless communication network, configuration parameters for communicating with the wireless communication network using one or more frequencies;
transmitting (432, 1006) the configuration parameters to the second user device via the pairing link;
receiving (440, 1008) an activation message from the wireless communication network; and
in response to receiving the activation message, transmitting (442, 1010), to the second user device via the pairing link, an activation signal to indicate to the second user device to start communicating with the wireless communication network using the one or more frequencies in accordance with the configuration parameters.

2. The method of claim 1, wherein:
the transmitting the configuration parameters to the second user device includes transmitting a configuration request message including the configuration parameters to the second user device; and
the method further comprises, in response to the transmitting the configuration request message, receiving from the second user device a configuration confirmation message.

3. The method of claim 1 or 2, wherein:
the transmitting the activation signal to the second user device includes transmitting an activation request message to the second user device; and
the method further comprises, in response to the transmitting the activation request message, receiving from the second user device an activation confirmation message.

4. The method of any one of claims 1-3, wherein the pairing with the second user device occurs after the receiving the configuration parameters.

5. The method of any one of claims 1-4, wherein the receiving the activation message includes the receiving the configuration parameters.

6. The method of any one of claims 1-5, wherein the one or more frequencies include a first one or more frequencies and a second one or more frequencies, and wherein the method further comprises:
connecting to the wireless communication network using the first one or more frequencies, which are different from the second one or more frequencies; and
communicating with the wireless communication network using the first one or more frequencies while the second user device communicates with the wireless communication network using the second one or more frequencies.

7. The method of claim 6, wherein
the second one or more frequencies include a second frequency that the configuration parameters indicate to be used for communicating unidirectionally with the wireless communication network in a uplink, UL,
the communicating with the wireless communication network using the first one or more frequencies includes communicating bidirectionally with the wireless communication network using the first one or more frequencies, and
the method further comprises transmitting, to the second user device via the pairing link, timing advance information for the communicating unidirectionally with the wireless communication network in the uplink, UL, using the second frequency.

8. The method of claim 7, further comprising:
transmitting, to the second user device via the pairing link, control information associated with a DL, wherein the control information includes one or both of: information indicating whether messages have been successfully received, and channel state information.

9. The method of any of claims 6-8, wherein the communicating with the wireless communication network using the first one or more frequencies includes communicating bidirectionally with the wireless communication network using the first one or more frequencies.

10. The method of any one of claims 6-9, wherein:
the communicating with the wireless communication network using the first one or more frequencies includes communicating with a first radio access network, RAN, node using the first one or more frequencies; and
the configuration parameters indicate communicating via a second RAN node using the second one or more frequencies.

11. The method of any one of claims 6-10, further comprising, after the second user device starts communicating with the wireless communication network using the second one or more frequencies:
selecting, by the first user device and either autonomously or in cooperation with the second user device, the first user device or the second user device to handle communications with the wireless communication network using the second one or more frequencies; and
when selecting the first user device,
transmitting to the second user device, via the pairing link, a deactivation signal to stop the second user device from communicating with the wireless communication network using the second one or more frequencies, and
communicating with the wireless communication network using the second one or more frequencies.

12. The method of any one of claims 1-11, further comprising:
transmitting first user device capability information to the second user device via the pairing link; and
receiving second user device capability information from the second user device via the pairing link.

13. The method of any one of claims 1-12, further comprising:
transmitting, to the wireless communication network, one or both of pairing capability information of the first user device and/or the second user device, the pairing capability information being indicative of which pairing link communication protocols are supported by the respective user device, and an indication that the first user device and the second user device are paired.

14. A method performed by a second user device coordinating with a first user device in a wireless communication network, the method comprising:
pairing (303, 570, 670, 770, 870, 1002) with the first user device to establish a pairing link for sharing resources used in communication with the wireless communication network;
receiving (304, 430, 1004), from the first user device via the pairing link, configuration parameters for communicating with the wireless communication network using one or more frequencies;
receiving (440, 1008), from the first user device via the pairing link, an activation signal that indicates to start communicating with the wireless communication network using the one or more frequencies in accordance with the configuration parameters.

15. A user device (102A, 102B) comprising processing hardware configured to enable the user device to perform the method of any one of claims 1-14.

## Patentansprüche

1. Verfahren, durchgeführt von einem ersten Benutzergerät, das mit einem oder mehreren anderen Benutzergeräten koordiniert, um Kommunikationen mit einem drahtlosen Kommunikationsnetzwerk zu erleichtern, wobei das Verfahren umfasst:
Koppeln (303, 570, 670, 770, 870, 1002) mit einem zweiten Benutzergerät, um eine Kopplungsverbindung zum Teilen von Ressourcen, die in Kommunikation mit dem drahtlosen Kommunikationsnetzwerk verwendet werden, herzustellen;
Empfangen (304, 430, 1004) von Konfigurationsparametern zum Kommunizieren mit dem drahtlosen Kommunikationsnetzwerk unter Verwendung einer oder mehrerer Frequenzen von dem drahtlosen Kommunikationsnetzwerk;
Übertragen (432, 1006) der Konfigurationsparameter an das zweite Benutzergerät über die Kopplungsverbindung;
Empfangen (440, 1008) einer Aktivierungsnachricht von dem drahtlosen Kommunikationsnetzwerk; und
als Reaktion auf das Empfangen der Aktivierungsnachricht, Übertragen (442, 1010) eines Aktivierungssignals an das zweite Benutzergerät über die Kopplungsverbindung, um dem zweiten Benutzergerät anzuzeigen, Kommunikation mit dem drahtlosen Kommunikationsnetzwerk unter Verwendung der einen oder mehreren Frequenzen in Übereinstimmung mit den Konfigurationsparametern zu beginnen.

2. Verfahren nach Anspruch 1, wobei:
das Übertragen der Konfigurationsparameter an das zweite Benutzergerät das Übertragen einer Konfigurationsanforderungsnachricht, die die Konfigurationsparameter beinhaltet, an das zweite Benutzergerät beinhaltet; und
das Verfahren ferner als Reaktion auf das Übertragen der Konfigurationsanforderungsnachricht Empfangen einer Konfigurationsbestätigungsnachricht von dem zweiten Benutzergerät umfasst.

3. Verfahren nach Anspruch 1 oder 2, wobei:
das Übertragen des Aktivierungssignals an das zweite Benutzergerät das Übertragen einer Aktivierungsanforderungsnachricht an das zweite Benutzergerät beinhaltet; und
das Verfahren ferner als Reaktion auf das Übertragen der Aktivierungsanforderungsnachricht Empfangen einer Aktivierungsbestätigungsnachricht von dem zweiten Benutzergerät umfasst.

4. Verfahren nach einem der Ansprüche 1-3, wobei das Koppeln mit dem zweiten Benutzergerät nach dem Empfangen der Konfigurationsparameter erfolgt.

5. Verfahren nach einem der Ansprüche 1-4, wobei das Empfangen der Aktivierungsnachricht das Empfangen der Konfigurationsparameter beinhaltet.

6. Verfahren nach einem der Ansprüche 1-5, wobei die eine oder mehreren Frequenzen eine erste eine oder mehrere Frequenzen und eine zweite eine oder mehrere Frequenzen beinhalten, und wobei das Verfahren ferner umfasst:
Verbinden mit dem drahtlosen Kommunikationsnetzwerk unter Verwendung der ersten einen oder mehreren Frequenzen, die sich von der zweiten einen oder mehreren Frequenzen unterscheiden; und
Kommunizieren mit dem drahtlosen Kommunikationsnetzwerk unter Verwendung der ersten einen oder mehreren Frequenzen, während das zweite Benutzergerät mit dem drahtlosen Kommunikationsnetzwerk unter Verwendung der zweiten einen oder mehreren Frequenzen kommuniziert.

7. Verfahren nach Anspruch 6, wobei
die zweite eine oder mehreren Frequenzen eine zweite Frequenz beinhalten, bezüglich der die Konfigurationsparameter anzeigen, zum unidirektionalen Kommunizieren mit dem drahtlosen Kommunikationsnetzwerk in einem Uplink, UL, verwendet zu werden, das Kommunizieren mit dem drahtlosen Kommunikationsnetzwerk unter Verwendung der ersten einen oder mehreren Frequenzen bidirektionales Kommunizieren mit dem drahtlosen Kommunikationsnetzwerk unter Verwendung der ersten einen oder mehreren Frequenzen beinhaltet, und
das Verfahren ferner Übertragen von Vorhaltezeitinformationen zum unidirektionalen Kommunizieren mit dem drahtlosen Kommunikationsnetzwerk im Uplink, UL, unter Verwendung der zweiten Frequenz an das zweite Benutzergerät über die Kopplungsverbindung umfasst.

8. Verfahren nach Anspruch 7, ferner umfassend:
Übertragen von Steuerinformationen, die mit einem DL assoziiert sind, an das zweite Benutzergerät über die Kopplungsverbindung, wobei die Steuerinformationen eines oder beides von: Informationen, die anzeigen, ob Nachrichten erfolgreich empfangen wurden, und Kanalzustandsinformationen beinhalteen.

9. Verfahren nach einem der Ansprüche 6-8, wobei das Kommunizieren mit dem drahtlosen Kommunikationsnetzwerk unter Verwendung der ersten einen oder mehreren Frequenzen bidirektionales Kommunizieren mit dem drahtlosen Kommunikationsnetzwerk unter Verwendung der ersten einen oder mehreren Frequenzen beinhaltet.

10. Verfahren nach einem der Ansprüche 6-9, wobei:
das Kommunizieren mit dem drahtlosen Kommunikationsnetzwerk unter Verwendung der ersten einen oder mehreren Frequenzen Kommunizieren mit einem ersten Funkzugangsnetzwerkknoten, RAN-Knoten, unter Verwendung der ersten einen oder mehreren Frequenzen beinhaltet; und
die Konfigurationsparameter Kommunizieren über einen zweiten RAN-Knoten unter Verwendung der zweiten einen oder mehreren Frequenzen anzeigen.

11. Verfahren nach einem der Ansprüche 6-10, ferner umfassend, nachdem das zweite Benutzergerät Kommunikation mit dem drahtlosen Kommunikationsnetzwerk unter Verwendung der zweiten einen oder mehreren Frequenzen beginnt:
Auswählen, durch das erste Benutzergerät und entweder autonom oder in Zusammenarbeit mit dem zweiten Benutzergerät, des ersten Benutzergeräts oder des zweiten Benutzergeräts zum Handhaben von Kommunikationen mit dem drahtlosen Kommunikationsnetzwerk unter Verwendung der zweiten einen oder mehreren Frequenzen; und wenn das erste Benutzergerät ausgewählt wird,
Übertragen eines Deaktivierungssignals an das zweite Benutzergerät über die Kopplungsverbindung, um das zweite Benutzergerät vom Kommunizieren mit dem drahtlosen Kommunikationsnetzwerk unter Verwendung der zweiten einen oder mehreren Frequenzen zu beenden, und
Kommunizieren mit dem drahtlosen Kommunikationsnetzwerk unter Verwendung der zweiten einen oder mehreren Frequenzen.

12. Verfahren nach einem der Ansprüche 1-11, ferner umfassend:
Übertragen von Fähigkeitsinformationen des ersten Benutzergeräts an das zweite Benutzergerät über die Kopplungsverbindung; und
Empfangen von Fähigkeitsinformationen des zweiten Benutzergeräts von dem zweiten Benutzergerät über die Kopplungsverbindung.

13. Verfahren nach einem der Ansprüche 1-12, ferner umfassend:
Übertragen von einem oder beidem von Kopplungsfähigkeitsinformationen des ersten Benutzergeräts und/oder des zweiten Benutzergeräts, wobei die Kopplungsfähigkeitsinformationen anzeigen, welche Kommunikationsprotokolle der Kopplungsverbindung von dem jeweiligen Benutzergerät unterstützt werden, und einer Anzeige, dass das erste Benutzergerät und das zweite Benutzergerät gekoppelt sind, an das drahtlose Kommunikationsnetzwerk.

14. Verfahren, durchgeführt von einem zweiten Benutzergerät, das mit einem ersten Benutzergerät in einem drahtlosen Kommunikationsnetzwerk koordiniert, wobei das Verfahren umfasst:
Koppeln (303, 570, 670, 770, 870, 1002) mit dem ersten Benutzergerät, um eine Kopplungsverbindung zum Teilen von Ressourcen, die in Kommunikation mit dem drahtlosen Kommunikationsnetzwerk verwendet werden, herzustellen;
Empfangen (304, 430, 1004) von Konfigurationsparametern zum Kommunizieren mit dem drahtlosen Kommunikationsnetzwerk unter Verwendung einer oder mehrerer Frequenzen von dem ersten Benutzergerät über die Kopplungsverbindung;
Empfangen (440, 1008) eines Aktivierungssignals, das anzeigt, Kommunikation mit dem drahtlosen Kommunikationsnetzwerk unter Verwendung der einen oder mehreren Frequenzen in Übereinstimmung mit den Konfigurationsparametern zu beginnen, von dem ersten Benutzergerät über die Kopplungsverbindung.

15. Benutzergerät (102A, 102B), umfassend Verarbeitungshardware, die konfiguriert ist, das Benutzergerät zu befähigen, das Verfahren nach einem der Ansprüche 1-14 durchzuführen.

## Revendications

1. Procédé réalisé par un premier dispositif utilisateur se coordonnant avec un ou plusieurs autres dispositifs utilisateurs afin de faciliter les communications avec un réseau de communication sans fil, le procédé comprenant :
l'appairage (303, 570, 670, 770, 870, 1002) avec un second dispositif utilisateur pour établir une liaison d'appairage pour partager des ressources utilisées dans la communication avec le réseau de communication sans fil ;
la réception (304, 430, 1004), à partir du réseau de communication sans fil, de paramètres de configuration pour communiquer avec le réseau de communication sans fil à l'aide d'une ou de plusieurs fréquences ;
la transmission (432, 1006) des paramètres de configuration au second dispositif utilisateur par l'intermédiaire de la liaison d'appairage ;
la réception (440, 1008) d'un message d'activation du réseau de communication sans fil ; et
en réponse à la réception du message d'activation, la transmission (442, 1010), au second dispositif utilisateur par l'intermédiaire de la liaison d'appairage, d'un signal d'activation pour indiquer au second dispositif utilisateur de commencer à communiquer avec le réseau de communication sans fil à l'aide des une ou plusieurs fréquences selon les paramètres de configuration.

2. Procédé selon la revendication 1, dans lequel :
la transmission des paramètres de configuration au second dispositif utilisateur comporte la transmission d'un message de demande de configuration comportant les paramètres de configuration au second dispositif utilisateur ; et
le procédé comprend également, en réponse à la transmission du message de demande de configuration, la réception, à partir du second dispositif utilisateur, d'un message de confirmation de configuration.

3. Procédé selon la revendication 1 ou 2, dans lequel :
la transmission du signal d'activation au second dispositif utilisateur comporte la transmission d'un message de demande d'activation au second dispositif utilisateur ; et
le procédé comprend également, en réponse à la transmission du message de demande d'activation, la réception, à partir du second dispositif utilisateur, d'un message de confirmation d'activation.

4. Procédé selon l'une quelconque des revendications 1 à 3, dans lequel l'appairage avec le second dispositif utilisateur a lieu après la réception des paramètres de configuration.

5. Procédé selon l'une quelconque des revendications 1 à 4, dans lequel le message d'activation comporte la réception des paramètres de configuration.

6. Procédé selon l'une quelconque des revendications 1 à 5, dans lequel les une ou plusieurs fréquences comportent des premières une ou plusieurs fréquences et des secondes une ou plusieurs fréquences, et dans lequel le procédé comprend également :
la connexion au réseau de communication sans fil à l'aide des premières une ou plusieurs fréquences, différentes des secondes une ou plusieurs fréquences ; et
la communication avec le réseau de communication sans fil à l'aide des premières une ou plusieurs fréquences, tandis que le second dispositif utilisateur communique avec le réseau de communication sans fil à l'aide des secondes une ou plusieurs fréquences.

7. Procédé selon la revendication 6, dans lequel les secondes une ou plusieurs fréquences comportent une seconde fréquence que les paramètres de configuration indiquent être utilisée pour communiquer de manière unidirectionnelle avec le réseau de communication sans fil en liaison montante, UL,
la communication avec le réseau de communication sans fil à l'aide des premières une ou plusieurs fréquences comporte une communication bidirectionnelle avec le réseau de communication sans fil à l'aide des premières une ou plusieurs fréquences, et le procédé comprend également la transmission, au second dispositif utilisateur par l'intermédiaire de la liaison d'appairage, d'informations d'avance de synchronisation pour la communication unidirectionnelle avec le réseau de communication sans fil dans la liaison montante, UL, à l'aide de la seconde fréquence.

8. Procédé selon la revendication 7, comprenant également :
la transmission, au second dispositif utilisateur par l'intermédiaire de la liaison d'appairage, d'informations de commande associées à une DL, dans lequel les informations de commande comportent une ou les deux suivantes : des informations indiquant si les messages ont été reçus avec succès et des informations sur l'état du canal.

9. Procédé selon l'une quelconque des revendications 6 à 8, dans lequel la communication avec le réseau de communication sans fil à l'aide des premières une ou plusieurs fréquences comporte une communication bidirectionnelle avec le réseau de communication sans fil à l'aide des premières une ou plusieurs fréquences.

10. Procédé selon l'une quelconque des revendications 6 à 9, dans lequel :
la communication avec le réseau de communication sans fil à l'aide des premières une ou plusieurs fréquences comporte une communication avec un premier nœud de réseau d'accès radio, RAN, à l'aide des premières une ou plusieurs fréquences ; et
les paramètres de configuration indiquent une communication par l'intermédiaire d'un second nœud RAN à l'aide des secondes une ou plusieurs fréquences.

11. Procédé selon l'une quelconque des revendications 6 à 10, comprenant également, après le démarrage, par le second dispositif utilisateur, de la communication avec le réseau de communication sans fil à l'aide des secondes une ou plusieurs fréquences :
la sélection, par le premier dispositif utilisateur et soit de manière autonome, soit en coopération avec le second dispositif utilisateur, du premier dispositif utilisateur ou du second dispositif utilisateur qui gérera les communications avec le réseau de communication sans fil à l'aide des secondes une ou plusieurs fréquences ; et
lors de la sélection du premier dispositif utilisateur,
la transmission au second dispositif utilisateur, par l'intermédiaire de la liaison d'appairage, d'un signal de désactivation pour empêcher le second dispositif utilisateur de communiquer avec le réseau de communication sans fil à l'aide des secondes une ou plusieurs fréquences, et
la communication avec le réseau de communication sans fil à l'aide des secondes une ou plusieurs fréquences.

12. Procédé selon l'une quelconque des revendications 1 à 11, comprenant également :
la transmission de premières informations de capacité du dispositif utilisateur au second dispositif utilisateur par l'intermédiaire de la liaison d'appairage ; et
la réception de secondes informations de capacité du dispositif utilisateur à partir du second dispositif utilisateur par l'intermédiaire de la liaison d'appairage.

13. Procédé selon l'une quelconque des revendications 1 à 12, comprenant également :
la transmission, au réseau de communication sans fil, d'une ou des deux informations de capacité d'appairage du premier dispositif utilisateur et/ou du second dispositif utilisateur, les informations de capacité d'appairage indiquant quels protocoles de communication de liaison d'appairage sont pris en charge par le dispositif utilisateur respectif, et une indication que le premier dispositif utilisateur et le second dispositif utilisateur sont appariés.

14. Procédé réalisé par un second dispositif utilisateur se coordonnant avec un premier dispositif utilisateur dans un réseau de communication sans fil, le procédé comprenant :
l'appairage (303, 570, 670, 770, 870, 1002) avec le premier dispositif utilisateur pour établir une liaison d'appairage pour partager des ressources utilisées dans la communication avec le réseau de communication sans fil ;
la réception (304, 430, 1004), à partir du premier dispositif utilisateur par l'intermédiaire de la liaison d'appairage, de paramètres de configuration pour communiquer avec le réseau de communication sans fil à l'aide d'une ou de plusieurs fréquences ;
la réception (440, 1008), à partir du premier dispositif utilisateur par l'intermédiaire de la liaison d'appairage, d'un signal d'activation pour indiquer de commencer à communiquer avec le réseau de communication sans fil à l'aide des une ou plusieurs fréquences selon les paramètres de configuration.

15. Dispositif utilisateur (102A, 102B) comprenant du matériel de traitement configuré pour activer le dispositif utilisateur pour réaliser le procédé selon l'une quelconque des revendications 1 à 14.
